# EUROPÄISCHE PATENTSCHRIFT

(11) **EP 1 300 004 B1**
(45) Veröffentlichungstag und Bekanntmachung des Hinweises auf die Patenterteilung: **30.03.2011**
(21) Anmeldenummer: 01965058.9
(22) Anmeldetag: 04.07.2001
(51) Int. Cl.: H04N 5/21, H04N 5/44

(54) **VORRICHTUNG UND VERFAHREN ZUR REDUKTION VON FLACKERSTÖRUNGEN**
DEVICE AND METHOD FOR REDUCING FLICKER DEFECTS
DISPOSITIF ET PROCEDE DE REDUCTION DES SCINTILLEMENTS PARASITES

(30) Priorität: 08.07.2000 DE 10033420
(43) Veröffentlichungstag der Anmeldung: 09.04.2003
(73) Patentinhaber: BTS Holding International B.V., 4827 HG Breda (NL)
(72) Erfinder: WISCHERMANN, Gerhard, 64331 Weiterstadt (DE)
(74) Vertreter: Wagner & Geyer
(86) Internationale Anmeldenummer: PCT/EP2001/007619
(87) Internationale Veröffentlichungsnummer: WO 2002/005548

(56) Entgegenhaltungen:
- EP-A- 0 666 688
- EP-A- 0 727 904
- EP-A- 0 735 747
- EP-A- 0 851 677
- DE-A- 4 220 662
- US-A- 4 322 750
- US-A- 5 025 312
- US-A- 5 260 775
- US-A- 5 488 422
- US-A- 5 903 680

## Beschreibung

Die Erfindung bezieht sich auf eine Vorrichtung und ein Verfahren zur Reduktion von Flackerstörungen in einem Videosignal mit einem zeitlichem Medianfilter zum Ausgleich von Helligkeitsschwankungen in dem Videosignal.

Bei historischem Filmmaterial sind oft großflächige und hochfrequente - und somit sehr störende - Flackereffekte zu beobachten. Diese von Filmbild zu Filmbild auftretenden Helligkeitsschwankungen sind zum Teil alterungs- und umweltbedingt, können aber auch durch unsachgemäßes Behandlung bei neuem Filmmaterial auftreten. Helligkeitsschwankungen, die von Bild zu Bild auftreten, können mit einem zeitlichen Medianfilter wirkungsvoll reduziert werden. Allerdings werden als ungewollte Nebenwirkungen zeitliche Bewegungsartefakte ins Ausgangssignal eingeführt. Diese können durch einen Bewegungsdetektor, der ab einem gewissen Unterschied zwischen Eingangs- und Ausgangssignal die Filterung abschaltet oder reduziert, gemindert werden. Da die Bewegungsschwelle auf den Wert der Flickeramplitude (typisch 6 %) eingestellt werden muss, treten bei schneller Bewegung noch sichtbare Artefakte auf. Ein solches Filter ist z. B. im Noise Reducer MNR11 von Philips implementiert.

Der Erfindung liegt die Aufgabe zugrunde, eine Vorrichtung und ein Verfahren zur Reduktion von Flackerstörungen zu schaffen, die eine weitgehende Eliminierung der durch eine zeitliche Medianfilterung eingeführten Bewegungsartefakte ennöglichen.

Diese Aufgabe wird durch die in Patentansprüchen 1 und 2 aufgeführten Merkmale gelöst.

Ausführungsbeispiele der Erfindung werden nachstehend anhand der Fig. näher erläutert. Es zeigen:
- Fig. 1: ein zeitliches Medianfilter,
- Fig. 2: ein nach der Coring-Technik arbeitendes Filter,
- Fig. 3: die erfindungsgemäße Vorrichtung zur Reduktion von Flackerstörungen und
- Fig. 4: beispielhafte Zeitverläufe von in der Vorrichtung nach Fig. 3 auftretender Signale.

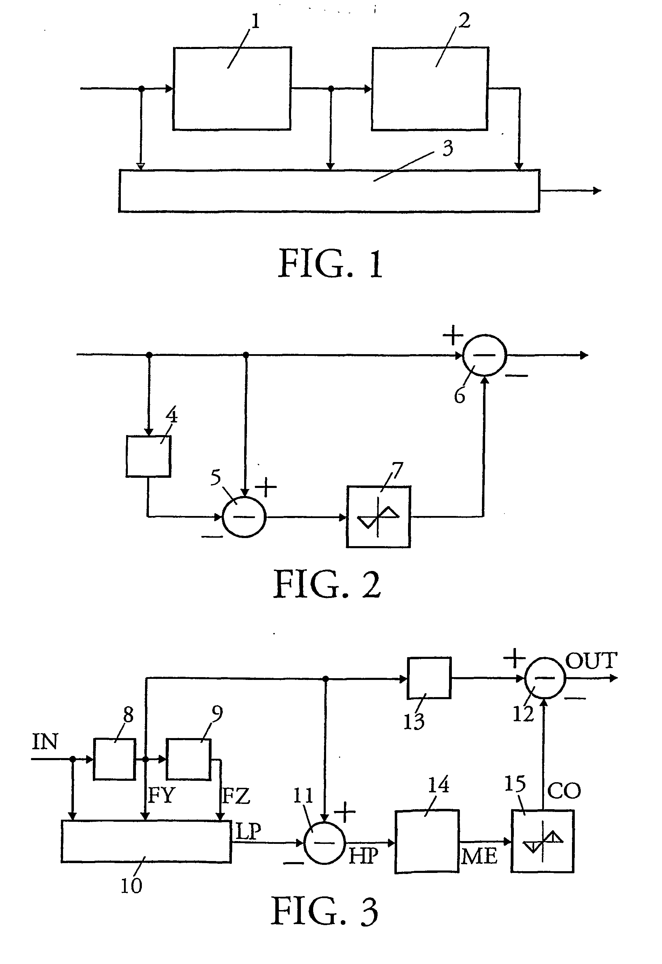

Das in Fig. 1 dargestellte, bekannte zeitliche Medianfilter, welches zwei Verzögerungsstufen 1 und 2 und einen Medianselektor 3 enthält, reduziert von Bild zu Bild auftretende Helligkeitsschwankungen. Die Verzögerungsstufen 1 und 2 verzögern das Bildsignal für die Dauer eines Vollbildes. Der Medianselektor 3 besteht üblicherweise aus einem Prozessor, der Bildpunkte (Pixel) der Eingangssignale der Verzögerungsstufen 1 und 2 und des Ausgangssignals der Verzögerungsstufe 2 verknüpft.

Durch das zeitliche Medianfilter (vgl. Fig. 1) werden allerdings ungewollte zeitliche Bewegungsartefakte ins Ausgangssignal der Verzögerungsstufe 2 eingeführt. Um diese Bewegungsartefakte weitgehend zu eliminieren wird erfindungsgemäß ein zeitliches Medianfilter mit einem nach der Coring-Technik arbeitenden Filter kombiniert.

In Fig. 2 ist ein bekanntes nach der Coring-Technik arbeitenden Filter dargestellt, welches ein Tiefpassfilter 4, Subtraktionsschaltung 5 und 6 und ein Amplitudensieb 7. Das Eingangssignal dieses nach der Coring-Technik arbeitenden Filters wird dem Tiefpassfilter 4, einem nichtinvertierenden Eingang der Subtraktionsschaltung 5 und einem nichtinvertierenden Eingang der Subtraktionsschaltung 6 angeführt. Das Ausgangssignal des Tiefpassfilters 4 wird einem invertierenden Eingang der Subtraktionsschaltung 5 zugeführt, die das aus der Subtraktion resultierende Signal dem Amplitudensieb 7 zuleitet. Das Amplitudensieb 7 unterdrückt alle Signalanteile mit einer hohen Amplitude. Ein invertierender Eingang der Subtraktionsschaltung 6 erhält das Ausgangssignal des Amplitudensiebs 7 und kombiniert dieses Ausgangssignal mit dem Eingangssignal.

Mit Hilfe des nach der Coring-Technik arbeitenden Filters wird aus einem Eingangssignal der hochfrequente Anteil extrahiert und für kleine Amplituden vom Eingangssignal subtrahiert. Es findet also nur für hochfrequente Signale mit kleiner Amplitude eine Filterung (oder Rauschreduktion) statt, wodurch ein Verlust von relevanter Information weitgehend vermieden wird.

In Figur 3 ist die erfindungsgemäße Vorrichtung mit einem zeitlichen Medianfilter und mit einem nach der Coring-Technik arbeitenden Filter dargestellt. Die Vorrichtung zur Unterdrückung von Flackerstörungen enthält ein zeitliches Medianfilter, welches aus Verzögerungsstufen 8 und 9 und einem Medianselektor 10 besteht, und Subtraktionsschaltungen 11 und 12, eine weitere Verzögerungsstufe 13, ein horizontal und vertikal wirkendes Medianfilter 14 und ein Amplitudensieb 15. Der Medianselektor 10 erhält das Eingangssignal IN der Vorrichtung und die Ausgangssignale FY und FZ der Verzögerungsstufen 8 und 9. Das Ausgangssignal FY der Verzögerungsstufe 8, die das Eingangssignal IN empfängt, wird einem nichtinvertierenden Eingang der Subtraktionsschaltung 11 und über die Verzögerungsstufe 13 einem nichtinvertierenden Eingang der Subtraktionsschaltung 12 zugeführt. Das Ausgangssignal LP des Medianselektors 10 ist das Eingangssignal eines invertierenden Eingangs der Subtraktionsschaltung 11, die ihr Ausgangssignal HP über den horizontal und vertikal wirkenden Medianfilter 14 (Ausgangssignal ME) dem Amplitudensieb 15 zuleitet. Das Ausgangssignal CO des Amplitudensiebs 15 wird über einem invertierenden Eingang der Subtraktionsschaltung 12 zugeführt, die das Ausgangssignal OUT der Vorrichtung zur Reduktion von Flackerstörungen bildet.

Das zeitliche Medianfilter selektiert über mindestens drei Filmbilder den mittleren Helligkeitswert und unterdrückt somit Flackerstörungen. Jedoch werden im Signal LP zeitliche Bewegungsartefakte eingeführt. Am Ausgang der Subtraktionsschaltung 11 liegt ein zeitlich mediangefiltertes Hochpasssignal vor, welches die Flackerstörungen und die Bewegungsartefakte beinhaltet. Da die Flackerstörungen über das gesamte Bild (also sehr großflächig) auftreten, passieren sie das horizontal und vertikal wirkende Medianfilter 14 ungehindert. Die Bewegungsartefakte, welche in ihrer horizontalen und vertikalen Größe auf die Größe der bewegten Objekte beschränkt sind, werden durch das Medianfilter 14 unterdrückt. In der Praxis hat sich eine Filterapertur über ca. 9 Zeilen und 15 Bildpunkte als ausreichend erwiesen.

Prinzipiell könnte anstelle des horizontal und vertikal wirkenden Medianfilter 14 auch ein lineares 2D-Filter zur Unterdrückung des Artefaktesignals verwendet werden. Das Medianfilter 14 hat jedoch den Vorzug, die impulsförmig verlaufenden Artefakte vollständig zu eliminieren.

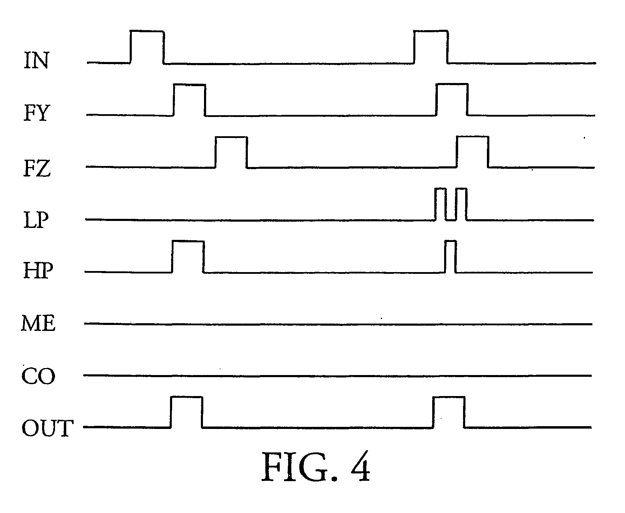

Die beispielhaften Zeitverläufe von in der erfindungsgemäßen Vorrichtung auftretender Signale zeigt Fig. 4. In Fig. 4 ist für ein schnell bewegtes Objekt (die Bild-zu-Bild Verschiebung ist größer als die Objektbreite) und für ein langsam bewegtes Objekt (die Verschiebung ist kleiner als die Objektbreite) die Entstehung des Artefaktsignals gezeigt. Zur dessen vollständiger Unterdrückung muss die Apertur des Medianfilters 14 mindestens zweimal so groß sein wie das schnell bewegte Objekt. Das nachfolgende Amplitudensieb 15 mit einer Coring-Kennlinie sorgt zusätzlich dafür, dass eventuell auftretende restliche Artefakte großer Amplitude unterdrückt werden. Die Schwellen A und -A der Coring Kennlinie werden auf die größte zu erwartende Flicker-Amplitude eingestellt. Durch Subtraktion des Ausgangssignals (Flickersignals) des Amplitudensiebs 15 vom laufzeitausgeglichenem Eingangssignal (T + 1 Rahmen/Bild) (Ausgangssignal der Verzögerungsstufe 13) findet die Störsignalbeseitigung statt. T ist die Laufzeit des horizontal und vertikal wirkenden Medianfilters 14. Selbstverständlich kann durch Verwendung eines zeitlichen Medianfilter mit mehr als 2 Verzögerungsstufen (Selektion von 3 Bildern) die Unterdrückung auf tieferfrequente Flackerstörungen erweitert werden. Das Medianfilter mit zwei Verzögerungsstufen hat im 60 Hz Standard die maximale Unterdrückung bzw. Auslöschung bei 6,25 Hz Flackerfrequenz, was bereits sehr guter Ergebnisse liefert.

## Patentansprüche

1. Vorrichtung zur Reduktion von Flackerstörungen in einem Videosignal, wobei das Videosignal einem zeitlichem Medianfilter zugeführt ist, mittels welchem Helligkeitsschwankungen in dem Videosignal reduziert werden, das Verzögerungsstufen (8, 9) und einen Medianselektor (10) aufweist, wobei die Vorrichtung eine erste Subtraktionsschaltung (11) aufweist, die das Ausgangssignal des Medianfilters (LP) von dem um die Verzögerungszeit des zeitlichen Medianfilters verzögerten Videosignal subtrahiert, wobei das Ausgangssignal der ersten Subtraktionsschaltung (HP) über ein horizontal und vertikal wirkendes Medianfilter (14) einem Amplitudensieb (15) zugeführt ist, welches Signale mit einer hohen Amplitude unterdrückt, und wobei eine zweite Subtraktionsschaltung (12) vorgesehen ist, die das Ausgangssignal (CO) des Amplitudensiebs (15) von dem entsprechend der Verzögerung des horizontal und vertikal wirkenden Medianfilters (14) verzögerten Videosignal subtrahiert und ein Ausgangssignal (OUT) bereitstellt.

2. Verfahren zur Reduktion von Flackerstörungen **gekennzeichnet durch** die Schritte:
- Filtern des Videosignals mittels eines zeitlichen Medianfilters, das Verzögerungsstufen (8, 9) und einen Medianselektor (10) aufweist, und mittels welchem Helligkeitsschwankungen in dem Videosignal reduziert werden;
- Subtrahieren eines um die Verzögerungszeit des zeitlichen Medianfilters verzögerten Videosignals von dem Ausgangssignal des Medianfilters (LP) in einer ersten Subtraktionsschaltung (11);
- Zuführen des Ausgangssignals der ersten Subtraktionsschaltung (11) üher ein horizontal und vertikal wirkendes Medianfilter (14) zu einem Amplituden sieb, welches Signale internet koten Amplitude unterdrückt;
- Subtrahieren des von dem Amplitudensiebs ausgegebenen Ausgangssignals von dem entsprechend der Verzögerung des horizontal und vertikal wirkenden Medianfilters (14) verzögerten Videosignal in einer zweiten Subtraktionsschaltung; und
- Bereitstellen eines Ausgangssignals am Ausgang der zweiten Subtraktionsschaltung.

## Claims

1. Device for reducing flicker disturbances in a video signal, wherein the video signal is fed to a temporal median filter, by means of which brightness fluctuations in the video signal are reduced and which has delay stages (8, 9) and a median selector (10), wherein the device has a first subtraction circuit (11), which subtracts the output signal of the median filter (LP) from the video signal delayed by the delay time of the temporal median filter, wherein the output signal of the first subtraction circuit (HP) is fed via a horizontally and vertically acting median filter (14) to an amplitude filter (15), which suppresses signals with a high amplitude, and wherein a second subtraction circuit (12) is provided, which subtracts the output signal (CO) of the amplitude filter (15) from the video signal delayed in accordance with the delay of the horizontally and vertically acting mediam filter (14) and provides an output signal (OUT).

2. Method for reducing flicker disturbances, **characterized by** the following steps:
- filtering of the video signal by means of a temporal median filter, which has delay stages (8, 9) and a median selector (10) and by means of which brightness fluctuations in the video signal are reduced;
- subtraction of a video signal delayed by the delay time of the temporal median filter from the output signal of the median filter (LP) in a first subtraction circuit (11);
- feeding of the output signal of the first subtraction circuit (11) via a horizontally and vertically acting median filter (14) to an amplitude filter, which suppresses signals with a high amplitude;
- subtraction of the output signal output by the amplitude filter from the video signal delayed in accordance with the delay of the horizontally and vertically acting median filter (14) in a second subtraction circuit; and
- provision of an output signal at the output of the second subtraction circuit.

## Revendications

1. Dispositif de réduction des scintillements parasites dans un signal vidéo, sachant que le signal vidéo est transmis à un filtre médian temporel au moyen duquel des fluctuations de luminosité sont réduites dans le signal vidéo, lequel présente des niveaux de temporisation (8, 9) et un sélecteur médian (10), que le dispositif présente un premier circuit de soustraction (11) qui soustrait du signal vidéo retardé de la durée de temporisation du filtre médian temporel, le signal de sortie du filtre médian (LP), que le signal de sortie du premier circuit de soustraction (HP) est transmis, par l'intermédiaire d'un filtre médian (14) agissant horizontalement et verticalement, à un séparateur de synchronisation (15) qui atténue les signaux de haute amplitude, et qu'est prévu un second circuit de soustraction (12) qui soustrait du signal vidéo retardé en fonction de la temporisation du filtre médian (14) agissant verticalement et horizontalement, le signal de sortie (CO) du séparateur de synchronisation (15), et met à disposition un signal de sortie (OUT).

2. Procédé de réduction des scintillements parasites **caractérisé par** les étapes suivantes :
- filtrage du signal vidéo à l'aide d'un filtre médian temporel qui présente des niveaux de temporisation (8,9) et un sélecteur médian (10), et au moyen duquel des fluctuations de luminosité sont réduites dans le signal vidéo ;
- soustraction d'un signal vidéo retardé de la durée de temporisation du filtre médian temporel d'un signal de sortie du filtre médian (LP) dans un premier circuit de soustraction (11) ;
- transmission, par l'intermédiaire d'un filtre médian (14) agissant horizontalement et verticalement, du signal de sortie du premier circuit de soustraction (11) à un séparateur de synchronisation qui atténue les signaux de haute amplitude ;
- soustraction du signal de sortie émis par le séparateur de synchronisation du signal vidéo retardé en fonction de la temporisation du filtre médian (14) agissant horizontalement et verticalement, dans un second circuit de soustraction ; et
- mise à disposition d'un signal de sortie à la sortie du second circuit de soustraction.
